# EUROPÄISCHE PATENTSCHRIFT

(11) **EP 3 812 639 B1**
(45) Veröffentlichungstag und Bekanntmachung des Hinweises auf die Patenterteilung: **07.06.2023**
(21) Anmeldenummer: 20193652.3
(22) Anmeldetag: 31.08.2020
(51) Int. Cl.: F16L 55/163

(54) **INNENABDICHTUNGSSYSTEM FÜR ROHRLEITUNGEN**
INTERIOR SEALING SYSTEM FOR PIPELINES
SYSTÈME D'ÉTANCHÉITÉ INTERNE POUR CONDUITES

(30) Priorität: 25.10.2019 DE 102019128835
(43) Veröffentlichungstag der Anmeldung: 28.04.2021
(60) Teilanmeldung: 21192811.4
(73) Patentinhaber: Amex Sanivar AG, 4623 Neuendorf (CH)
(72) Erfinder: Vollenbroich, Maximilian, 40239 Düsseldorf (DE); Helfgen, Darvin, 40470 Düsseldorf (DE)
(74) Vertreter: Ksoll, Peter

(56) Entgegenhaltungen:
- DE-B3-102012 111 341
- US-A- 3 960 395
- US-A- 5 570 890
- US-A- 5 954 344
- US-A- 6 152 455

## Beschreibung

Die Erfindung betrifft ein Innenabdichtungssystem für Rohrleitungen gemäß den Merkmalen im Oberbegriff von Anspruch 1.

Innenabdichtungssysteme der vorliegend in Rede stehenden Art kommen zum Abdichten von Rohrleitungen mit undichten Rohrverbindungen oder Rissen zum Einsatz. Das Innenabdichtungssystem weist eine Dichtungsmanschette auf. Diese wird innenseitig der Rohrleitung ringsum auf eine abzudichtende Stoßfuge oder einen Riss aufgelegt und durch Spannbänder aus Edelstahl abdichtend radial gegen die Rohrinnenwand gepresst. Ein zu einem Ring geformtes Spannband wird hierzu in Umfangsrichtung durch eine tangential wirkende Kraft aufgespreizt, wobei der durch die Spreizkraft erzeugte Anpressdruck durch an den Enden des Spannbands angeordnete Schlossstücke mit dazwischen eingegliedertem Passstück aufrecht erhalten wird.

Ein bekanntes Innenabdichtungssystem für Rohrleitungen geht aus der DE 1 989 642 U hervor. Die dort als Riegelstück bezeichneten Bauteile bestehen aus einem in seiner Länge der Breite eines Spannbands entsprechenden Vierkantbolzen, der an seinen beiden Seitenflächen mit einander gegenüberliegenden Längsnuten versehen ist, zur Aufnahme jeweils eines Endes des Spannbands und eines Passstücks.

Üblicherweise werden die Schloss- bzw. Riegelstücke auf die Enden der Stahlbänder aufgeschweißt. Über die Schlossstücke lässt sich das Spannband mittels eines Hydraulikwerkzeugs aufspannen. Die Nachbearbeitung des Spannbands nach dem Aufschweißen der Schlossstücke kostet allerdings zusätzliches Material und ist zeitaufwendig. Bedingt durch die Form des Schlossstückes lässt sich der Einbau nicht ohne Sicherung, insbesondere durch eine zusätzliche schwere Sicherungsstange, durchführen. Auch erfordert die Montage wegen einer fehlenden Führung für das Einbauwerkzeug ein gewisses Geschick und Erfahrung. Zudem ist die Länge eines Spannbands fertigungstechnisch bedingt durch die angeschweißten Schlossstücke festgelegt.

Durch die US 5,954,344 A zählt ein Innenabdichtungssystem für Rohrleitungen zum Stand der Technik mit einer Dichtungsmanschette, einem Spannband und einem Schlossstück. Das Schlossstück weist einen Grundkörper auf mit einer Oberseite, einer Unterseite, einer ersten Druckseite und einer zweiten Druckseite sowie zwei Außenseiten, wobei in jeder Druckseite eine Nut zur Aufnahme eines Endes des Spannbands oder eines Passstücks vorgesehen ist. Die Nut an der ersten Druckseite ist an den Außenseiten jeweils durch einen Wandabschnitt begrenzt. Oberhalb der Nut an der zweiten Druckseite ist eine Führung für ein Einbauwerkzeug vorgesehen.

Der Erfindung liegt ausgehend vom Stand der Technik die Aufgabe zugrunde, ein montagetechnisch verbessertes rationelles Innenabdichtungssystem für Rohrleitungen zu schaffen.

Die Lösung dieser Aufgabe besteht in einem Innenabdichtungssystem für Rohrleitungen gemäß Anspruch 1.

Vorteilhafte Ausgestaltungen und Weiterbildungen des erfindungsgemäßen Innenabdichtungssystems sind Gegenstand der abhängigen Ansprüche 2 bis 7.

Das Innenabdichtungssystem für Rohrleitungen weist wenigstens eine Dichtungsmanschette, ein Spannband und ein Schlossstück auf. Das Schlossstück weist einen Grundkörper mit einer Oberseite, einer Unterseite, einer ersten Druckseite und einer zweiten Druckseite sowie zwei Außenseiten auf. In jeder Druckseite ist eine Nut zur Aufnahme eines Endes des Spannbands oder eines Passstückes vorgesehen.

Die Nut ist an der ersten Druckseite an den Außenseiten jeweils durch einen Wandabschnitt begrenzt. Ferner ist oberhalb der Nut an der zweiten Druckseite eine Führung für ein Einbauwerkzeug vorgesehen. Die Nut an der ersten Druckseite bildet eine taschenförmige Aufnahme für das Ende eines Spannbands und begrenzt dieses nach oben und unten sowie zu den beiden Außenseiten. Die Führung an der zweiten Druckseite bildet eine Werkzeugansatzfläche. Zweckentsprechend ist die Führung zur Aufnahme der Wirkfläche eines Einbauwerkzeuges profiliert, so dass ein Einbauwerkzeug mit seiner Wirkfläche in der Führung kraft- und formschlüssig zur Anlage gelangt.

Die Erfindung sieht vor, dass an zumindest einer Außenseite des Schlossstücks, vorzugsweise an beiden Außenseiten, ein Sichtfenster vorgesehen ist, über welches der Nutgrund der Nut an der ersten Druckseite ersichtlich ist.

Die Schlossstücke können mittels eines Werkzeugs, beispielsweise eines Hammers, und per Hand auf das bzw. die Enden eines Spannbands angebracht werden. Das Ende des Spannbandes sitzt fest in der Nut an der ersten Druckseite und ist dort kraft- und formschlüssig gehalten. Eine schweißtechnische Fügung ist nicht erforderlich. Die Montage ist durch das Sichtfenster einfach gestaltet. Ein weiterer Vorteil der aufsteckbaren Schlossstücke ist die Flexibilität bei der Bemaßung der Spannbänder. Da eine stoffschlüssige Fügung nicht erforderlich ist, kann das Spannband nach einer Sichtung in einer Rohrleitung nachträglich gekürzt werden. Dies ermöglicht eine Produktion von festgelegten Längenabmaßen und die flexible Anpassung an die jeweilige Rohrleitung vor Ort. Dies bringt den Vorteil mit sich, dass durch die Erhöhung der Passgenauigkeit die Dichtwirkung des Spannbands bzw. des Innenabdichtungssystems insgesamt erhöht wird. Wesentlich ist auch die integrierte Führung für das Einbauwerkzeug. Dieses ermöglicht den Einbau ohne eine unhandliche und schwere Sicherungsstange.

Eine vorteilhafte Ausgestaltung sieht vor, dass die Führung durch einen Schlitz, insbesondere durch einen sich über die zweite Druckseite erstreckenden Längsschlitz, gebildet ist.

Die Führung ist vorteilhafterweise im Querschnitt keilförmig konfiguriert. Dies ermöglicht einen sowohl hinsichtlich der Krafteinleitung als auch der Widerlagerung form- und kraftschlüssigen Ansatz eines Einbauwerkzeuges.

Des Weiteren ist vorgesehen, dass der Grundkörper an der Oberseite einen sich in Richtung zur Nut an der zweiten Druckseite verjüngende Schräge aufweist.

Ein weiterer vorteilhafter Aspekt der Erfindung sieht vor, dass das Spannband zumindest eine Aufnahme für ein Widerlagerbauteil aufweist. Vorzugsweise wird die Aufnahme durch eine Ausnehmung bzw. ein Loch im Spannband gebildet.

Das Widerlagerbauteil weist einen Ankerabschnitt und einen Stützabschnitt auf. Der Ankerabschnitt ist dafür ausgebildet, in eine Aufnahme im Spannband eingesetzt zu werden. Der Stützabschnitt fungiert als Gegenlager für das Einbauwerkzeug und zum Übertragen der Spann- bzw. der Aufweitkraft auf das Passstück und damit auf das Spannband.

Zweckmäßigerweise sind in Längsrichtung des Spannbands zumindest zwei Aufnahmen, vorzugsweise mehrere Aufnahmen, mit Abstand hintereinander und seitlich versetzt zueinander angeordnet. Auf diese Weise können beim Einbau des Spannbands die Widerlagerbauteile jeweils von Aufnahme zu Aufnahme versetzt positioniert und das Spannband sequenziell gespannt werden.

Um die Einstellung des Spannbands auf dessen Solldurchmesser zu vereinfachen, kommen die Widerlagerbauteile zum Einsatz. Diese lassen sich an das Spannband in die vorgegebenen Aufnahmen einsetzen. Mittels des Einbauwerkzeuges kann dann der Durchmesser des Spannbands aufgespreizt werden. Anschließend wird das Spannband auf das Endmaß gekürzt und ein Passstück in die sich nun gegenüberliegenden Nuten an den zweiten Druckseiten des Spannbands eingesetzt.

Die Spannbänder bestehen aus Stahl, insbesondere aus Edelstahl.

Die Dichtungsmanschetten können aus verschiedenen Werkstoffen bestehen. Je nach Anwendung kommen verschiedene Werkstoffe zum Einsatz. Ethylen-Propylen-Dien-Monomer (EPDM) kommt als Werkstoff für eine Dichtungsmanschette in Anwendungen bei Trinkwasser, Rohwasser, industriellem und kommunalem Wasser oder Kühlwasser zum Einsatz. Nitrile Butadiene Rubber (NBR) kommt als Werkstoff für Dichtungsmanschetten zur Anwendung, die eine chemische Beständigkeit aufweisen müssen und zur Anwendung bei Gas und Ölen vorgesehen sind. Fluorkautschuk (FKM) ist für Anwendungen, bei denen eine hohe Temperaturbeständigkeit gefordert ist, geeignet, beispielsweise für den Einsatz bei Benzin.

Die Dichtungsmanschette besitzt jeweils endseitig einen Bereich mit Dichtlippen, die nach außen, also zur Rohrwand hin, gerichtet sind. Auf der innen liegenden Seite der Dichtungsmanschette sind Verzahnungslippen vorgesehen. Diese unterstützen einen dichten Anschluss einer weiteren Dichtungsmanschette in Längsrichtung einer Rohrleitung.

Ein erfindungsgemäßes Innenabdichtungssystem für Rohrleitungen besteht einbautechnisch üblicherweise aus mindestens einer Dichtungsmanschette, zwei Spannbändern, wobei jeweils an jedem Ende eines Spannbands ein erfindungsgemäßes Schlossstück vorgesehen ist. Zwischen die Schlossstücke wird ein Passstück eingegliedert.

Bei der Montage bzw. dem Einbau des Innenabdichtungssystems wird üblicherweise zunächst ein Abdeckband auf die Rohrinnenseite im abzudichtenden Bereich aufgelegt. Dies ist insbesondere in Druckrohrleitungen notwendig. Das Abdeckband besteht beispielsweise auf Polyethylen und wird über die Rohrverbindung bzw. den abzudichtenden Bereich entlang des Umfangs der Rohrleitung gelegt, um zu verhindern, dass die Dichtungsmanschette aufgrund des Druckes an der Verbindungsstelle beschädigt wird.

Nach Anbringen des Abdeckbands wird die Dichtungsmanschette eingesetzt. Die auf den Innendurchmesser der Rohrleitung angepasste maßgeschneiderte Dichtungsmanschette wird über dem Abdeckband positioniert und fixiert.

Im nächsten Schritt wird das erste Spannband in die Dichtungsmanschette eingesetzt. Die beiden Enden des Spannbands sollten sich dabei in 4-Uhr- oder 8-Uhr-Position befinden. Die freien Enden des Spannbands sind jeweils mit einem Schlossstück versehen. Hierzu können die Schlossstücke vor Ort auf der Baustelle auf die Enden montiert werden. Die Enden greifen in die taschenförmige Nut an der ersten Druckfläche eines Schlossstücks. Über das bzw. die Sichtfenster kann der korrekte Sitz überprüft werden.

Mit Hilfe des Einbauwerkzeugs wird das Spannband hydraulisch aufgeweitet und gedehnt, bis das Spannband umfangsseitig an der Dichtungsmanschette festsitzt. Der Einbauvorgang des Spannbands und der druckdichte Sitz der Dichtungsmanschette kann dadurch unterstützt und beschleunigt werden, wenn der Monteur mit einem geeigneten Schlagwerkzeug, beispielsweise einem Nylonhammer, im gesamten Rohrumfang auf das Spannband schlägt. Durch die Vibration wird der Druck des Spannbands auf die Dichtungsmanschette ausgeglichen und die Dichtheit verbessert. Wenn der endgültige Sitz des Spannbands erreicht ist, wird ein geometrisch entsprechend abgestimmtes Passstück zwischen die beiden an den Enden des Spannbands befindlichen Schlossstücke eingesetzt. Das Passstück greift jeweils in die Nut in der zweiten Druckseite der sich auf dem Umfang gegenüberliegenden Schlossstücke ein.

Nach Anbringen des ersten Spannbands und Einsetzen des Passstückes wird das nächste Spannband gesetzt. Je nach Größe des abzudichtenden Bereichs werden mehrere Dichtungsmanschetten aneinander gekoppelt oder auch breitere Dichtungsmanschetten eingesetzt. Die Anzahl der Spannbänder wird entsprechend erhöht.

Während der Aufweitung der Spannbänder unter hydraulischem Druck werden diese durch Widerlagerbauteile bzw. Passstücke fixiert. Letztendlich wird ein Passstück zwischen beiden Enden des Spannbands positioniert. Danach kann das Einbauwerkzeug entfernt werden. Zur Fixierung wird ein Passstück in einer Größe gewählt, die der vorliegenden Lücke möglichst entspricht. Das Passstück wird in die Lücke gedrückt und nachdem das Passstück fachgerecht fixiert ist, durch Schläge leicht abgerundet, um sich dem Konturverlauf der Rohrinnenwand und des Spannbands anzupassen.

Nach ordnungsgemäßem Einbau des Innenabdichtungssystems über einer undichten Rohrverbindung oder einer Beschädigung kann eine Druckprüfung durchgeführt werden, um die Dichtheit zu kontrollieren. Die Prüfung erfolgt durch Auffüllen der Dichtungsmanschette über ein integriertes Prüfventil.

Die Erfindung ist nachfolgend anhand von Zeichnungen näher beschrieben. Es zeigen:
- Figur 1: einen Ausschnitt aus einer Rohrleitung mit einer Einbauansicht auf das Innenabdichtungssystem;
- Figur 2: in vergrößerter Darstellung einen Ausschnitt aus der Figur 1 mit der Darstellung des Stoßbereichs zwischen den Enden eines Spannbands;
- Figur 3: ein Schlossstück in einer perspektivischen Ansicht von hinten;
- Figur 4: das Schlossstück in einer perspektivischen Ansicht von vorne;
- Figur 5: das Schlossstück in einer Draufsicht;
- Figur 6: das Schlossstück in einer stirnseitigen Ansicht;
- Figur 7: einen Querschnitt durch die Darstellung der Figur 5 entlang der Linie A-A;
- Figur 8: ein erstes Widerlagerbauteil in einer perspektivischen Ansicht;
- Figur 9: ein zweites Widerlagerbauteil in einer perspektivischen Ansicht;
- Figur 10: eine Einbauansicht des Spannbandes mit der Darstellung eines Abschnittes eines Spannbands sowie eines Schlossstücks und eines Widerlagerbauteils;
- Figur 11: eine Einbauansicht ohne die Darstellung einer Rohrleitung und einer Dichtungsmanschette und
- Figur 12 bis 18: die Bauteile und den Einbau des Innenabdichtungssytems in verschiedenen Einbausituationen.

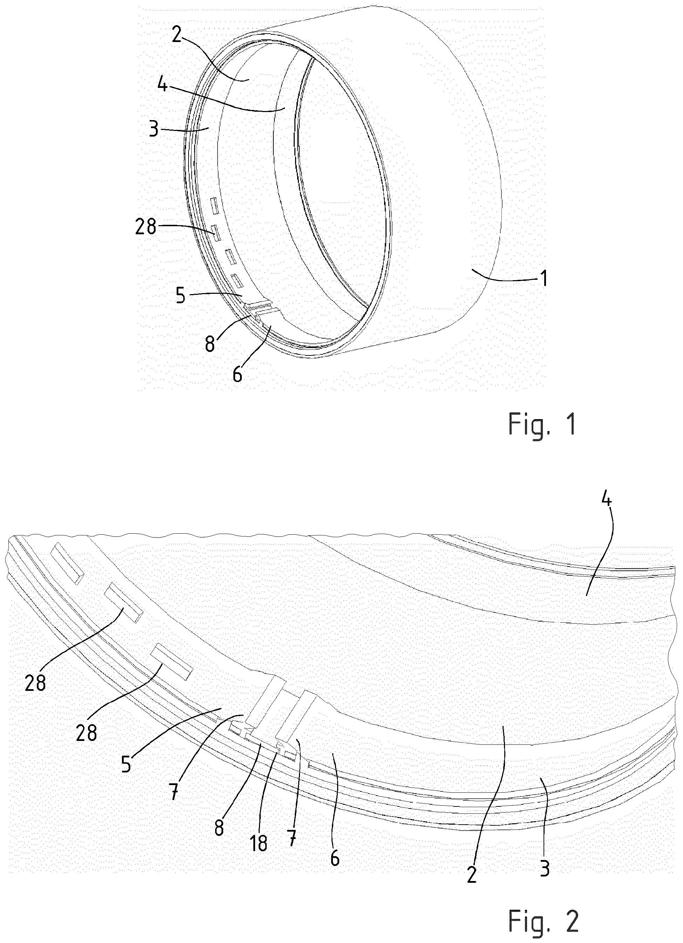

Figur 1 zeigt einen Ausschnitt aus einer Rohrleitung 1, die im Bereich einer undichten Rohrverbindung oder eines Risses durch ein Innenabdichtungssystem abgedichtet wird. Die Figur 2 zeigt einen vergrößerten Ausschnitt aus der Figur 1.

Das Innenabdichtungssystem umfasst eine Dichtungsmanschette 2 aus einem elastischen Werkstoff, beispielsweise EPDM, NBR oder FKM und zwei Spannbänder 3, von denen in den Figuren 1 und 2 nur das vordere Spannband 3 dargestellt ist. Innenseitig weist die Dichtungsmanschette 2 umlaufende Aufnahmen 4 für die Spannbänder 3 auf. Eine solche Aufnahme 4 ist im hinteren Bereich der Dichtungsmanschette 2 zu erkennen. Auf der zur Rohrwand gerichteten Innenseite besitzt die Dichtungsmanschette 2 jeweils im äußeren Bereich hier nicht dargestellte Dichtlippen.

Die Spannbänder 3 bestehen aus Edelstahl. Die Dichtungsmanschette 2 wird gegebenenfalls unter Eingliederung eines hier nicht dargestellten Abdeckbands in die Rohrleitung 1 eingegliedert. Als nächstes wird das erste Spannband 3 montiert. Das Spannband 3 kann hierzu im Bedarfsfall vor Ort auf die notwendige Länge gekürzt werden. Vor Ort werden an die Enden 5, 6 des Spannbands 3 jeweils ein Schlossstück 7 aufgesetzt. Auch dies erfolgt auf der Baustelle vor Ort und kann mittels eines Schlagwerkzeugs und per Hand erfolgen.

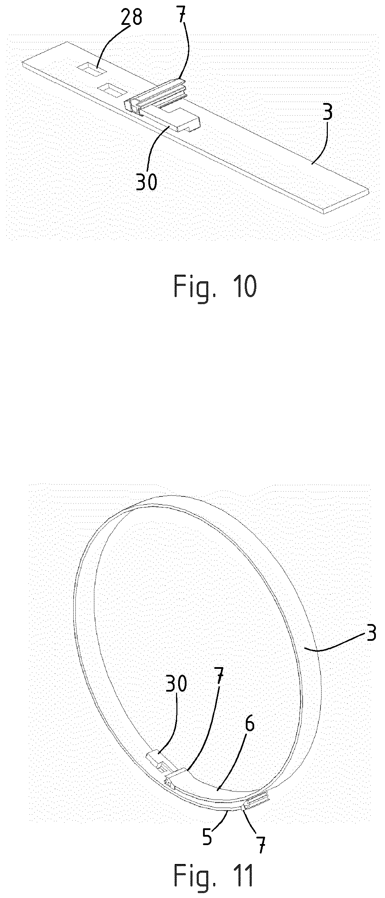

Das Spannband 3 wird radial aufgeweitet, bis die korrekte Spannstellung erreicht ist. Dies erfolgt mit Hilfe eines Einbauwerkzeugs, welches in Umfangsrichtung eine tangential wirkende Kraft auf die Schlossstücke 7 bzw. die Enden 5, 6 aufbringt. Die Figur 11 zeigt ein ringförmig gebogenes Spannband 3, welches an seinen beiden Enden 5, 6 mit einem aufgesteckten Schlossstück 7 versehen ist. Die Enden 5, 6 überlappen einander.

Die Figur 1 ebenso wie die Figur 2 zeigen die Spannstellung des Spannbandes 3 innerhalb des Innenabdichtungssystems. Die beiden mit jeweils einem Schlossstück 7 versehenen Enden 5, 6 liegen sich in Umfangsrichtung gegenüber. Zwischen den Schlossstücken 7 ist ein Passstück 8 eingegliedert, welches den Abstand zwischen den Schlossstücken 7 in der Spannstellung überbrückt.

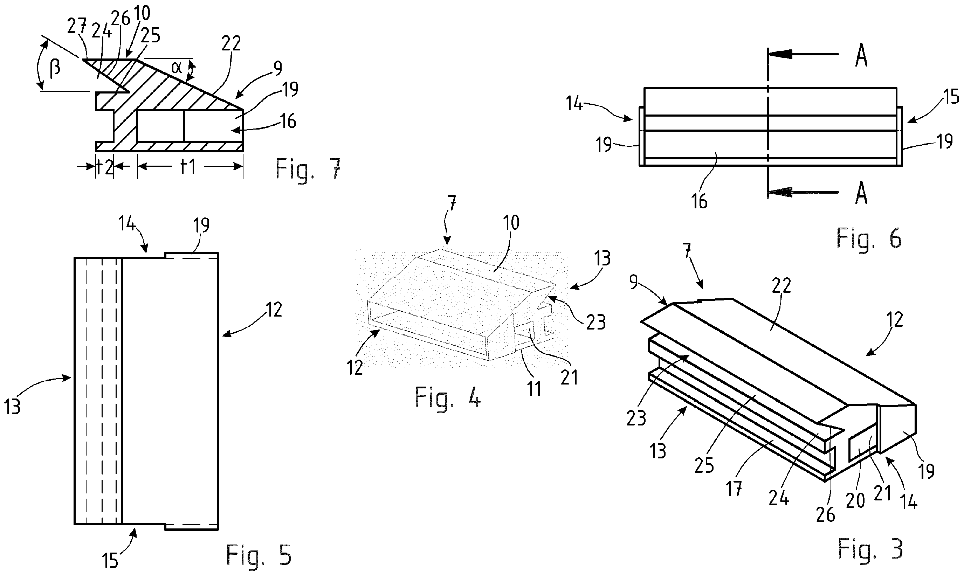

Ein Schlossstück 7 ist in den Figuren 3 bis 7 zu erkennen.

Das Schlossstück 7 weist einen Grundkörper 9 auf mit einer Oberseite 10, einer Unterseite 11, einer ersten Druckseite 12 und einer zweiten Druckseite 13 sowie zwei Außenseiten 14, 15. In der ersten Druckseite 12 ist eine Nut 16 zur Aufnahme eines Endes 5, 6 des Spannbandes 3 vorgesehen. In der zweiten Druckseite 13 des Grundkörpers 9 ist eine Nut 17 zur Aufnahme eines Endes 18 eines Passstückes 8 vorgesehen.

Die Nut 16 an der ersten Druckseite 12 ist an den Außenseiten 14, 15 jeweils durch einen Wandabschnitt 19 begrenzt. Hierdurch ist die Nut 16 taschenartig konfiguriert, so dass ein aufgenommenes Ende 5 bzw. 6 des Spannbands 3 in der Nut 16 allseitig begrenzt und kraft- und formschlüssig aufgenommen ist. Man erkennt, dass die Nut 16 in der ersten Druckseite 12 eine deutlich größere Tiefe t1 besitzt als die Nut 17 an der zweiten Druckseite 13. Insbesondere weist die Nut 16 an der ersten Druckseite 12 eine Tiefe t1 auf, die drei- bis achtmal länger, insbesondere sechsmal länger als die Tiefe t2 der Nut 17 an der zweiten Druckseite 13 ist.

An beiden Außenseiten 14, 15 des Grundkörpers 9 ist ein Sichtfenster 20 vorgesehen. Im Bereich der Sichtfenster 20 ist die Nut 16 in der ersten Druckseite 12 endseitig offen, so dass der Nutgrund 21 der Nut 16 erkennbar ist. Dies ist vorteilhaft für die Montage des Spannbandes 3 und zur Überprüfung des korrekten Sitzes des Endes 5, 6 eines Spannbandes 3 im Schlossstück 7.

Man erkennt des Weiteren, dass der Grundkörper 9 des Schlossstücks 7 an der Oberseite 10 eine sich in Richtung zur Nut 16 an der zweiten Druckseite 13 verjüngende Schräge 22 aufweist. Die Schräge 22 verläuft ausgehend von der plan ausgebildeten Oberseite 10 und einem Winkel α von 25° abwärts.

An der zweiten Druckseite 13 des Grundkörpers 9 ist eine Führung 23 für ein Einbauwerkzeug vorgesehen. Die Führung 23 ist konfigurativ als Werkzeugansatzfläche gestaltet und durch einen Schlitz 24 gebildet. Der Schlitz 24 ist ein Längsschlitz und erstreckt sich über die Länge der zweiten Druckseite 13. Der Schlitz 24 ist keilförmig und weist eine parallel zur Unterseite 11 verlaufende Flachflanke 25 sowie eine mit der Flachflanke 25 einen spitzen Winkel β einschließende Keilflanke 26 auf. Der Winkel β beträgt im dargestellten Ausführungsbeispiel 35°. Die vordere Spitze 27 an der Oberseite 10 des Grundkörpers 9 steht gegenüber der zweiten Druckseite 13 vor.

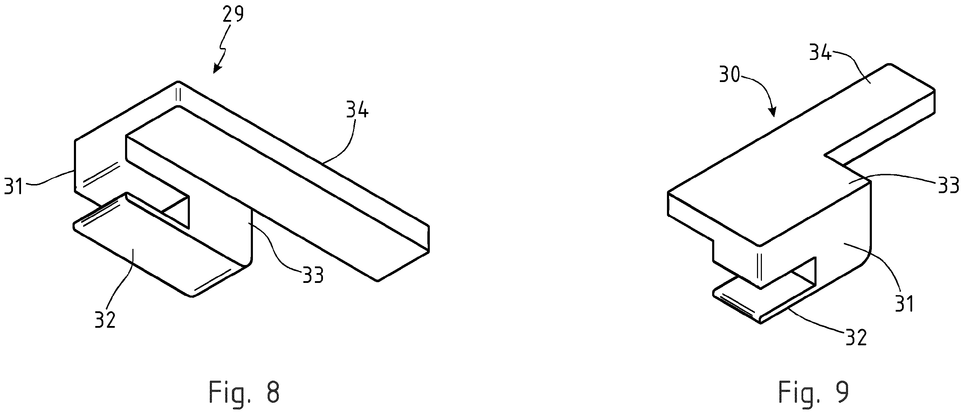

Das Spannband 3 weist mehrere Aufnahmen 28 in Form von rechteckförmigen Ausnehmungen auf. Im dargestellten Ausführungsbeispiel sind die Aufnahmen 28 im Spannband 3 rechteckig und durchsetzen das Spannband 3 auf seiner gesamten Dicke. In Längsrichtung des Spannbands 3 sind mehrere Aufnahmen 28 jeweils mit Abstand hintereinander und seitlich versetzt zueinander angeordnet (siehe hierzu auch Figur 10). In den Aufnahmen 28 kann ein Widerlagerbauteil 29 bzw. 30 festgelegt werden. Die Widerlagerbauteile 29, 30 werden fachterminologisch auch Spreizkeile genannt. Die Figuren 8 und 9 zeigen die Widerlagerbauteile 29, 30. Das Widerlagerbauteil 29 gemäß der Figur 8 ist als linkes Widerlagerbauteil 29 konfiguriert und wird in die Aufnahmen 28 auf der linken Seite des Spannbands 3 eingesetzt. Das Widerlagerbauteil 30 gemäß der Darstellung der Figur 9 ist als rechtes Widerlagerbauteil 30 konfiguriert und wird in Aufnahmen 28 auf der rechten Seite des Spannbands 3 eingesetzt. Jedes Widerlagerbauteil 29, 30 weist einen Ankerabschnitt 31 auf, mit welchem es in einer Aufnahme 28 im Spannband 3 positioniert werden kann. Hierzu ist der Ankerabschnitt 31 krallenartig ausgestaltet, so dass er mit einem Haken 32 das Spannband 3 umgreifen kann. Des Weiteren besitzt jedes Widerlagerbauteil 29, 30 einen Stützabschnitt 33 mit einem nach vorne vorstehenden Führungssteg 34.

Zur Montage des Spannbands 3 wird zunächst ein, beispielsweise das erste Widerlagerbauteil 29, in eine Aufnahme 28 im Spannband 3 eingesetzt (siehe Figur 11). Das Einbauwerkzeug kann dann zwischen das erste Widerlagerbauteil 29 und dem Schlossstück 7 eingesetzt werden und aufgespreizt werden. Hierdurch wird das Schlossstück 7 von dem Widerlagerbauteil 29 weggedrückt und das Spannband 3 aufgespreizt. Der Vorgang wird bis zum Erreichen der endgültigen Spannstellung des Spannbands 3 wiederholt. Nachdem das Spannband 3 ein Stück tangential aufgespreizt bzw. verschoben worden ist, wird das zweite Widerlagerbauteil 30 in die nächste Aufnahme 28 im Spannband 3 eingesetzt und das Spannband 3 mittels des Einbauwerkzeugs weiter aufgespreizt. Dieser Vorgang wird so lange fortgesetzt, bis das Spannband 3 die endgültige Spannstellung erreicht hat. In der Spannstellung wird das Spannband 3 durch das Passstück 8 fixiert. Das Passstück 8 wird zwischen die sich gegenüberliegenden Schlossstücke 7 eingetrieben. Hierbei greifen die stirnseitigen Enden 18 des Passstücks 8 jeweils in eine Nut 17 an der zweiten Druckfläche 13 eines Schlossstücks 7.

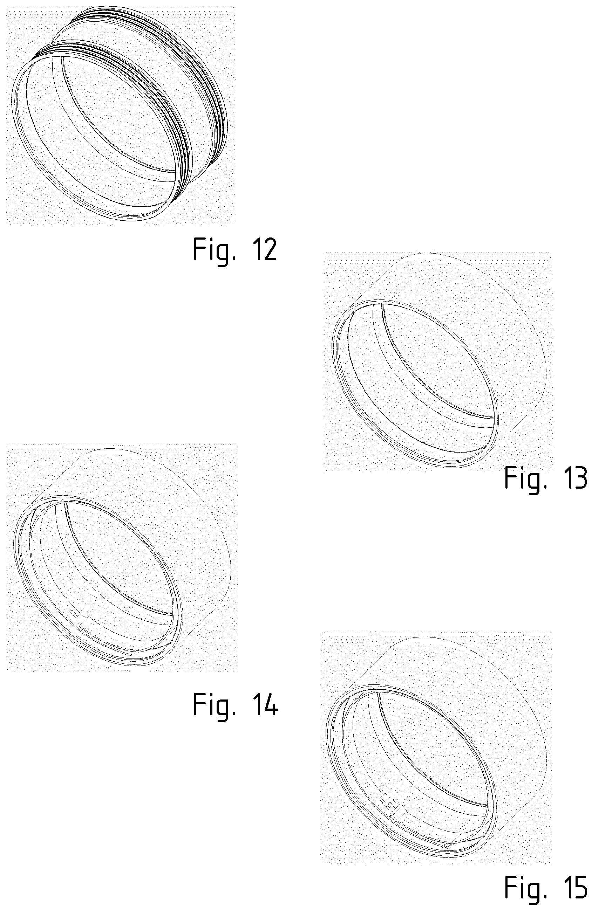

Anhang der Figuren 12 bis 18 sind nochmals die Bauteile des Innenabdichtungssystems und deren Einbau in eine Rohrleitung 1 zusammenfassend erläutert.

Die Figur 12 zeigt eine perspektivische Ansicht auf eine Dichtungsmanschette 2. Man erkennt die an der Außenfläche umlaufenden radial gerichteten Dichtlippen 35.

Die Figur 13 zeigt die Dichtungsmanschette 2 eingegliedert in eine Rohrleitung 1, von der hier wiederum nur ein Ausschnitt dargestellt ist.

Die Figur 14 zeigt die Anordnung mit einem in die Dichtungsmanschette 2 eingesetzten Spannband 3. Die Enden 5, 6 des zu einem Ring geformten Spannbandes 3 überlappen sich.

Die Figur 15 zeigt eine Einbausituation entsprechend der Darstellung der Figur 14. Die Enden 5, 6 des Spannbandes 3 überlappen sich. Auf die Enden 5, 6 ist jeweils ein Schlossstück 7 montiert. Des Weiteren ist ein rechtes Widerlagerbauteil 30 in eine Aufnahme 28 im Spannband 3 eingesetzt.

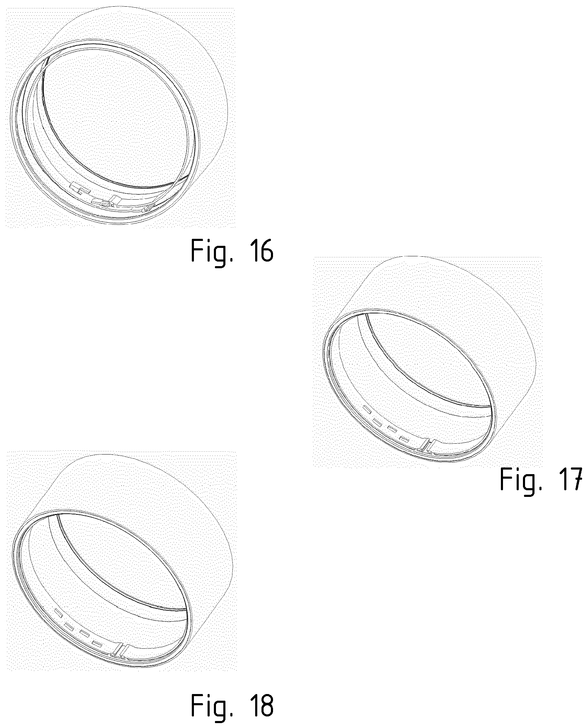

Die Figur 16 zeigt das sich endseitig überlappende Spannband 3 mit eingesetztem rechten Widerlagerbauteil 30 und linkem Widerlagerbauteil 29. Das Spannband 3 wird sukzessiv mittels eines Einbauwerkzeugs in Umfangsrichtung der Rohrleitung 1 bzw. der Dichtungsmanschette 2 aufgedrückt und radial gegen die Innenwand der Dichtungsmanschette 2 verspannt.

Die Darstellung der Figur 17 zeigt, dass aufgedrückte Spannband 3 in seiner Spannstellung. Die beiden an den Enden 5, 6 angeordneten Schlossstücke 7 liegen sich mit radialem Abstand gegenüber. Dies ist die Einbausituation kurz vor Einschlagen des Passstückes 8.

Die Figur 18 zeigt das eingebaute Spannband 3 mit eingeschlagenem Passstück 8. Das Spannband 3 befindet sich in seiner endgültigen Spannstellung. Nachfolgend wird ein zweites Spannband 3 in die in Bildebene hintere Aufnahme 4 der Dichtungsmanschette 2 montiert.

### Bezugszeichen:

- 1 -: Rohrleitung
- 2 -: Dichtungsmanschette
- 3 -: Spannband
- 4 -: Aufnahme von 2
- 5 -: Ende von 3
- 6 -: Ende von 3
- 7 -: Schlossstück
- 8 -: Passstück
- 9 -: Grundkörper von 7
- 10 -: Oberseite
- 11 -: Unterseite
- 12 -: erste Druckseite
- 13 -: zweite Druckseite
- 14 -: Außenseite
- 15 -: Außenseite
- 16 -: Nut von 12
- 17 -: Nut von 13
- 18 -: Ende von 8
- 19 -: Wandabschnitt
- 20 -: Sichtfenster
- 21 -: Nutgrund
- 22 -: Schräge
- 23 -: Führung
- 24 -: Schlitz
- 25 -: Flachflanke
- 26 -: Keilflanke
- 27 -: vordere Spitze
- 28 -: Aufnahme in 3
- 29 -: linkes Widerlagerbauteil
- 30 -: rechtes Widerlagerbauteil
- 31 -: Ankerabschnitt
- 32 -: Haken
- 33 -: Stützabschnitt von 29, 30
- 34 -: Führungssteg
- 35 -: Dichtlippe

- t1 -: Tiefe von 16
- t2 -: Tiefe von 17
- α -: Winkel
- β -: Winkel

## Patentansprüche

1. Innenabdichtungssystem für Rohrleitungen (1), mit wenigstens einer Dichtungsmanschette (2), einem Spannband (3) und einem Schlossstück (7), wobei das Schlossstück (7) einen Grundkörper (9) aufweist mit einer Oberseite (10), einer Unterseite (11), einer ersten Druckseite (12) und einer zweiten Druckseite (13) sowie zwei Außenseiten (14, 15), wobei in jeder Druckseite (12, 13) eine Nut (16, 17) zur Aufnahme eines Endes (5, 6) des Spannbands (3) oder eines Passstückes (8) vorgesehen ist und die Nut (16) an der ersten Druckseite (12) an den Außenseiten (14, 15) jeweils durch einen Wandabschnitt (19) begrenzt ist und oberhalb der Nut (17) an der zweiten Druckseite (13) eine Führung (23) für ein Einbauwerkzeug vorgesehen ist, **dadurch gekennzeichnet, dass** zumindest an einer Außenseite (14, 15) ein Sichtfenster (20) vorgesehen ist, über welches der Nutgrund (21) der Nut (16) an der ersten Druckseite (12) ersichtlich ist.

2. Innenabdichtungssystem nach Anspruch 1, **dadurch gekennzeichnet, dass** die Führung (23) durch einen Schlitz (24) gebildet ist.

3. Innenabdichtungssystem nach Anspruch 2, **dadurch gekennzeichnet, dass** der Schlitz (24) im Querschnitt keilförmig ist.

4. Innenabdichtungssystem nach einem der Ansprüche 1 bis 3, **dadurch gekennzeichnet, dass** der Grundkörper (9) an der Oberseite (10) eine sich in Richtung zur Nut (17) an der zweiten Druckseite (13) verjüngende Schräge (22) aufweist.

5. Innenabdichtungssystem nach einem der Ansprüche 1 bis 4, **dadurch gekennzeichnet, dass** das Spannband (3) eine Aufnahme (28) für ein Widerlagerbauteil (29, 30) aufweist.

6. Innenabdichtungssystem nach Anspruch 5, **dadurch gekennzeichnet, dass** das Widerlagerbauteil (29, 30) einen Ankerabschnitt (31) und einen Stützabschnitt (33) aufweist.

7. Innenabdichtungssystem nach Anspruch 5 oder 6, **dadurch gekennzeichnet, dass** in Längsrichtung des Spannbands (3) zumindest zwei Aufnahmen (28) mit Abstand hintereinander und seitlich versetzt zueinander angeordnet sind.

## Claims

1. Internal sealing system for pipes (1), having at least one sealing sleeve (2), a tensioning strap (3) and a lock section (7), wherein the lock section (7) has a base body (9) with an upper face (10), a lower face (11), a first pressure face (12) and a second pressure face (13), as well as two external faces (14, 15), wherein a groove (16, 17) is provided in each pressure face (12, 13) for receiving one end (5, 6) of a tensioning strap (3) or a fitting piece (8), and the groove (16) on the first pressure face (12) is bounded at the outer faces (14, 15) by a wall portion (19), and a guide (23) for an installation tool is provided above the groove (17) on the second pressure face (13), **characterised in that** at least on one outer face (14, 15) a viewing window (20) is provided through which the groove base (21) of the groove (16) in the first pressure face (12) is visible.

2. Internal sealing system according to claim 1, **characterised in that** the guide (23) is formed by a slot (24).

3. Internal sealing system according to claim 2, **characterised in that** the slot (24) is wedge-shaped in cross-section.

4. Internal sealing system according to any one of claims 1 to 3, **characterised in that** the base body (9) has on the upper face (10) a sloped section (22) that tapers towards the groove (17) in the second pressure face (13).

5. Internal sealing system according to any one of claims 1 to 4, **characterised in that** the tensioning strap (3) has a receptacle (28) for an abutment component (29, 30).

6. Internal sealing system according to claim 5, **characterised in that** the abutment component (29, 30) has an anchor section (31) and a support section (33).

7. Internal sealing system according to claim 5 or 6, **characterised in that** at least two receptacles (28) are arranged at a distance behind one another and laterally offset from one another in the longitudinal direction of the tensioning strap (3).

## Revendications

1. Système d'étanchéité interne pour des tuyauteries (1), avec au moins une manchette de garniture (2), une bande de serrage (3) et une pièce de serrure (7), dans lequel la pièce de serrure (7) présente un corps de base (9) avec un côté supérieur (10), un côté inférieur (11), un premier côté de pression (12) et un second côté de pression (13) ainsi que deux côtés extérieurs (14, 15), dans laquelle dans chaque côté de pression (12, 13), une rainure (16, 17) est prévue pour la réception d'une extrémité (5, 6) de la bande de serrage (3) ou d'un adaptateur (8), et la rainure (16) est délimitée au niveau du premier côté de pression (12) sur les côtés extérieurs (14, 15) respectivement par une section de paroi (19) et au-dessus de la rainure (17) sur le second côté de pression (13), un guidage (23) est prévu pour un outil d'installation, **caractérisé en ce qu'**une fenêtre de visualisation (20) est prévue au moins sur un côté extérieur (14, 15), par le biais de laquelle le fond de rainure (21) de la rainure (16) est visible sur le premier côté de pression (12).

2. Système d'étanchéité interne selon la revendication 1, **caractérisé en ce que** le guidage (23) est formé par une fente (24).

3. Système d'étanchéité interne selon la revendication 2, **caractérisé en ce que** la fente (24) est en forme de coin dans la section transversale.

4. Système d'étanchéité interne selon l'une quelconque des revendications 1 à 3, **caractérisé en ce que** le corps de base (9) sur le côté supérieur (10) présente un biais (22) se rétrécissant en direction de la rainure (17) sur le second côté de pression (13).

5. Système d'étanchéité interne selon l'une quelconque des revendications 1 à 4, **caractérisé en ce que** la bande de serrage (3) présente un logement (28) pour un composant de contre-appui (29, 30).

6. Système d'étanchéité interne selon la revendication 5 **caractérisé en ce que** le composant de contre-appui (29, 30) présente une section d'ancrage (31) et une section d'appui (33).

7. Système d'étanchéité interne selon la revendication 5 ou 6, **caractérisé en ce que** dans le sens longitudinal de la bande de serrage (3), au moins deux logements (28) sont agencés à distance l'un derrière l'autre et en déport latéralement l'un de l'autre.
